# FASCICULE DE BREVET EUROPEEN

(11) **EP 1 408 130 B1**
(45) Date de publication et mention de la délivrance du brevet: **18.05.2005**
(21) Numéro de dépôt: 03291821.1
(22) Date de dépôt: 23.07.2003
(51) Int. Cl.: C22C 19/05, B23K 35/02, B23K 35/40

(54) **Alliage à base de nickel pour la soudure électrique d'alliages de nickel et d'aciers, fil de soudage et utilisation**
Nickelbasislegierung für das elektrische Schweissen von Nickel-Legierungen und Stählen, Schweissdraht und deren Verwendung
Nickel based alloy for electrical welding of nickel alloys and steels, welding wire and its use

(30) Priorité: 26.09.2002 FR 0211937
(43) Date de publication de la demande: 14.04.2004
(73) Titulaire: Framatome ANP, 92400 Courbevoie (FR)
(72) Inventeur: Chabenat, Alain, 71100 Chalon-Sur-Saone (FR); Pierron, Dominique, 71620 Saint-Martin-en-Bresse (FR); Thomas, André, 69004 Lyon (FR); Faure, François, 92210 Saint-Cloud (FR); Guyon, Claude, 71510 Charrecey (FR)
(74) Mandataire: Bouget, Lucien

(56) Documents cités:
- EP-A- 0 109 350
- WO-A-02/40728
- GB-A- 1 470 911
- GB-A- 2 123 031
- US-A- 4 798 632
- US-A- 5 543 109
- PATENT ABSTRACTS OF JAPAN vol. 013, no. 595 (C-672), 27 décembre 1989 (1989-12-27) -& JP 01 252750 A (NKK CORP), 9 octobre 1989 (1989-10-09)
- PATENT ABSTRACTS OF JAPAN vol. 1996, no. 09, 30 septembre 1996 (1996-09-30) -& JP 08 127848 A (SUMITOMO METAL IND LTD), 21 mai 1996 (1996-05-21)
- PATENT ABSTRACTS OF JAPAN vol. 1996, no. 04, 30 avril 1996 (1996-04-30) -& JP 07 331390 A (SUMITOMO METAL IND LTD), 19 décembre 1995 (1995-12-19)
- PATENT ABSTRACTS OF JAPAN vol. 009, no. 241 (C-306), 27 septembre 1985 (1985-09-27) -& JP 60 100640 A (NIPPON KOKAN KK), 4 juin 1985 (1985-06-04)
- PATENT ABSTRACTS OF JAPAN vol. 2000, no. 21, 3 août 2001 (2001-08-03) -& JP 2001 107196 A (SUMITOMO METAL IND LTD), 17 avril 2001 (2001-04-17)
- PATENT ABSTRACTS OF JAPAN vol. 016, no. 006 (C-0900), 9 janvier 1992 (1992-01-09) -& JP 03 229838 A (NIPPON STAINLESS STEEL CO LTD), 11 octobre 1991 (1991-10-11)
- PATENT ABSTRACTS OF JAPAN vol. 1998, no. 12, 31 octobre 1998 (1998-10-31) -& JP 10 183282 A (MITSUBISHI HEAVY IND LTD), 14 juillet 1998 (1998-07-14)

## Description

L'invention concerne un alliage à base de nickel pour la soudure électrique d'alliages de nickel et d'aciers, en particulier d'aciers non ou faiblement alliés et d'aciers inoxydables.

L'invention est également relative à des fils et à des électrodes pour le soudage électrique de pièces en alliage de nickel et/ou en acier, en particulier dans le domaine de la construction, de l'assemblage et de la réparation de composants de réacteurs nucléaires.

Pour la fabrication de certains composants ou éléments de réacteurs nucléaires, il est connu d'utiliser des alliages à base de nickel renfermant du chrome.

On a utilisé en particulier, pour la fabrication d'éléments ou composants de réacteurs nucléaires refroidis par de l'eau sous pression, un alliage de nickel à environ 15 % de chrome, appelé alliage 600.

Pour améliorer la tenue à la corrosion des éléments ou composants des réacteurs nucléaires refroidis par de l'eau sous pression, la tendance est de remplacer l'alliage 600 à environ 15 % de chrome par un alliage 690 à environ 30 % de chrome et 10 % de fer environ.

Pour réaliser des soudures sur ces éléments ou composants en alliage de nickel, on utilise des fils ou électrodes de soudage électrique en alliage de nickel dont la composition est adaptée au soudage de l'alliage 600 ou de l'alliage 690.

On a donné dans le tableau 1 ci-dessous des compositions typiques de fils vendus dans le commerce, pour le soudage de l'alliage 690 et pour le soudage de l'alliage 600 (alliage 52 ou alliage 82).

Dans les quatre premières colonnes du tableau 1, on a fait figurer les compositions de fils en alliage 52 de désignation commerciale Inconel 52 de la société américaine Special Metals réalisés à partir de quatre coulées différentes et utilisés pour le soudage de l'alliage 690.

A la dernière colonne du tableau, on a fait figurer une analyse typique d'un fil en alliage 82 de désignation commerciale Phyweld 82 de la société Sprint Metal, pour le soudage de l'alliage 600.

Les fils en alliage 52 ou 82 peuvent être utilisés en particulier pour le soudage électrique sous gaz inerte de l'alliage 690 ou de l'alliage 600.

**TABLEAU 1**

| Analyse de fils pour le soudage des alliages 600 et 690 | | | | | | | |
|---|---|---|---|---|---|---|---|
| | Fil alliage 52 | Fil alliage 52 | Fil alliage 52 | Fil alliage 52 | Fil CF52 exemple comparatif | Fil 52 M exemple comparatif | Fil Alliage 82 |
| Coulée | 1 | 2 | 3 | 4 | | | |
| C | 0,022 | 0,020 | 0,020 | 0,020 | 0,022 | 0,020 | 0,030 |
| S | 0,001 | 0,001 | 0,001 | 0,001 | 0,002 | 0,001 | 0,002 |
| P | 0,004 | 0,004 | 0,003 | 0,004 | < 0,003 | 0,003 | 0,003 |
| Si | 0,150 | 0,140 | 0,140 | 0,170 | 0,020 | 0,03 | 0,170 |
| Mn | 0,25 | 0,24 | 0,25 | 0,25 | 0,88 | 0,92 | 3,04 |
| Ni | 61,13 | 60,46 | 60,40 | 59,13 | 58,20 | 60,10 | 70,54 |
| Cr | 29,00 | 28,97 | 28,91 | 28,94 | 30,93 | 30,13 | 20,99 |
| Cu | 0,010 | 0,010 | 0,010 | 0,010 | | 0,03 | 0,005 |
| Co | 0,040 | 0,010 | 0,010 | 0,010 | | | 0,010 |
| Mo | 0,010 | 0,010 | 0,010 | 0,010 | 0.012 | 0,02 | |
| Nb | 0,021 | 0,010 | 0,010 | 0,010 | 0,918 | 0,93 | 2,287 |
| Al | 0,660 | 0,690 | 0,670 | 0,680 | 0,065 | 0,08 | |
| Ti | 0,560 | 0,580 | 0,560 | 0,530 | 0,193 | 0,22 | 0,200 |
| Fe | 8,14 | 8,86 | 9,03 | 10,25 | 9,12 | 8,50 | 2,72 |
| Zr | | | | | 0,0013 | 0,006 | |
| B | | | | | 0,0028 | 0,0040 | |
| Nb/Si | 0,14 | 0,07 | 0,00 | 0,00 | 45,90 | 31,0 | 13,45 |

Les fils de soudage en alliage 52 sont utilisés, en particulier dans le domaine nucléaire, pour réaliser des soudures dans des zones des composants de réacteur nucléaire en contact avec le fluide primaire qui est de l'eau à haute température (de l'ordre de 310°C) et sous forte pression (de l'ordre de 155 bars), dans le cas des réacteurs nucléaires refroidis par de l'eau sous pression.

L'alliage 52 est utilisé aussi bien pour le soudage homogène de pièces en alliage 690 que pour effectuer des soudures hétérogènes. De telles soudures hétérogènes peuvent être par exemple des soudures sur un alliage 600 à 15 % de chrome sous forme massive ou déposé sur un métal de base, la teneur en chrome du métal déposé pouvant aller de 15 % à 20 %.

Un autre cas d'utilisation de l'alliage 52 en soudure hétérogène est le revêtement d'aciers faiblement alliés tels que des aciers 16MND5, 18MND5 ou 20MND5 ou le soudage d'aciers faiblement alliés à des aciers inoxydables austénitiques ou austéno-ferritiques.

On peut également utiliser l'alliage 52 pour des réparations de zones d'éléments ou composants de réacteur nucléaire constituées de métaux divers tels que des aciers peu alliés (par exemple du type 18MND5 selon la norme française), des aciers inoxydables du type 304L (par exemple sous forme massive), de type 308L (sous forme déposée) ou encore 316L (sous forme massive ou déposée) désignés selon les normes américaines. Ces zones peuvent comporter plusieurs de ces matériaux sur lesquels on effectue des soudures hétérogènes en alliage 52.

Lors de l'utilisation d'alliages 52 du commerce, tels que les alliages 52 de la société Special Metals, on a mis en évidence certains défauts, principalement sous la forme de petites fissures.

En particulier, lorsque le fil de soudage fondu est déposé sur une couche constituée d'un alliage de nickel déposé par soudage, on a observé une fissuration à chaud qui peut résulter de l'un des phénomènes suivants : solidification, liquation, ré-affectation ou encore manque de ductilité à chaud. On a observé qu'on peut rencontrer un seul type ou plusieurs types de fissuration dans une soudure. Les fissures formées dans ces conditions qui sont de petite dimension seront désignées comme fissures de type 1.

On a effectué une campagne d'essais sur des fils de soudage de compositions différentes, dans des conditions de soudage variables, en particulier en fondant ces fils sur des métaux de base divers tels que : alliages de nickel tels que mentionnés plus haut et aciers inoxydables, sous forme de métaux massifs ou de couches prédéposées par soudage.

Au cours de ces essais on a mis en évidence que les fils disponibles sur le marché, en particulier les alliages 52 pour le soudage des alliages de nickel 690 donnaient de mauvais résultats lorsqu'ils étaient déposés sur des alliages de nickel à 15 % ou 30 % de chrome ou encore des aciers inoxydables déposés par soudage, sous forme de revêtement de composants en acier faiblement allié.

On a observé non seulement des petites fissures de type 1 mais également, dans certains cas, d'autres fissures de plus grandes dimensions qui seront désignées comme fissures à chaud de type 2.

On a observé en particulier des fissures de type 2 dans les zones de forte dilution de l'alliage de soudage (dans le métal déposé au cours des premières passes de soudage ou au voisinage des pièces à joindre) ou plus généralement dans le cas du soudage des aciers inoxydables.

Lors de ces essais, on a utilisé également des fils pour soudage du commerce dont les nuances ont été modifiées pour améliorer la tenue à la fissuration à chaud et la résistance à l'oxydation.

La composition modifiée de ces fils du commerce est donnée dans les colonnes 5 et 6 du tableau 1. Les nuances modifiées pour améliorer la résistance à la fissuration à chaud et les défauts dus à l'oxydation ont une teneur en niobium sensiblement accrue (au-dessus de 0,9 %) et des teneurs en aluminium et titane sensiblement plus faibles que les nuances commerciales non modifiées.

Dans ces nuances améliorées, le rapport niobium/silicium est élevé (supérieur à 30 ou même à 45). Enfin, ces nuances renferment à titre d'éléments complémentaires du bore et du zirconium.

. Il s'est avéré que les alliages améliorés du commerce donnaient de bons résultats dans les zones de dilution lors du soudage des alliages de nickel à 15 % ou 30 % de chrome, ces zones étant pratiquement exemptes de fissuration à chaud mais de mauvais résultats dans les zones de dilution, dans le cas du soudage sur des aciers inoxydables, des fissures à chaud de type 2 étant décelées dans ces zones de dilution.

La campagne d'essais effectuée a montré qu'il n'existe pas de fils vendus dans le commerce qui permettent de réaliser des soudures électriques homogènes ou hétérogènes sur des alliages de nickel et sur des aciers qui soient exemptes de fissuration et d'oxydation.

Le document JP-A-1-252750 divulgue un alliage à base de nickel présentant la composition suivante en pourcentage pondéral: C ≤ 0,10%, Si ≤ 0,20%, Mn ≤ 0,50%, Cr 15-40%, Al 0,05-2%, Fe ≤ 25%, reste Ni avec impuretés inévitables, avec si nécessaire un ou plus de Mo ≤ 3%, W ≤ 3%, Nb ≤ 1%, N ≤ 0,1%, Ti ≤ 1%, Zr ≤ 0,3%, B ≤ 0,03%, Co ≤ 15%, Y ≤ 0.5% et terres rares ≤ 0,5%.

Le but de l'invention est donc de proposer un alliage à base de nickel pour la soudure électrique d'alliages de nickel et d'aciers, en particulier d'aciers inoxydables, qui permette de réaliser des soudures homogènes ou hétérogènes sur ces matériaux qui soient exemptes de fissurations à chaud et de traces d'oxydation.

Dans ce but, l'alliage suivant l'invention renferme, en poids, moins de 0,05 % de carbone, de 0,015 % à 0,5 % de silicium, de 0,4 % à 1,4 % de manganèse, de 28 % à 31,5 % de chrome, de 8 % à 12 % de fer, de 2 % à 7 % de molybdène, de 0 % à 0,8 % de titane, de 0,6 % à 2 % au total de niobium et de tantale, le rapport des pourcentages de niobium plus tantale et de silicium étant au moins égal à 4, de 0 % à 0,75 % d'aluminium, moins de 0,04 % d'azote, de 0,0008 % à 0,0120 % de zirconium, de 0,0010 % à 0,010 % de bore, moins de 0,01 % de soufre, moins de 0,020 % de phosphore, moins de 0,30 % de cuivre, moins de 0,15 % de cobalt et moins de 0,10 % de tungstène, le reste, à l'exception d'impuretés inévitables dont la teneur totale est au plus égale à 0,5 %, étant constitué par du nickel.

L'invention concerne en particulier un alliage renfermant moins de 0,2 % de silicium, environ 4 % de molybdène, 0,006 % de zirconium et 0,004 % de bore.

L'invention est également relative à un fil de soudage pour soudage électrique sous gaz en alliage à base de nickel selon l'invention.

L'invention est de plus relative à l'application de l'alliage et du fil de soudage électrique pour le soudage d'éléments ou composants de réacteurs nucléaires, en particulier de réacteurs nucléaires refroidis par de l'eau sous pression, pour la réalisation d'assemblages lors de la construction des réacteurs nucléaires, le revêtement par dépôt de métal de composants et pour effectuer des réparations, ces opérations de soudage pouvant être des opérations de soudage homogène ou hétérogène sur tout composant en alliage de nickel ou en acier.

Afin de bien faire comprendre l'invention, on va décrire, à titre d'exemples, plusieurs nuances d'alliages suivant l'invention utilisées pour la fabrication de fils qui ont été utilisés lors d'essais de soudage homogène et hétérogène sur des alliages de nickel et des aciers inoxydables.

Sur le tableau 2, on a donné à la colonne 1 les teneurs minimales des différents éléments de l'alliage, à la colonne 2, les teneurs maximales de ces éléments et, à la colonne 3, les teneurs préférentielles.

Les colonnes 4 et 5 du tableau donnent des compositions d'alliages selon deux exemples de réalisation qui seront décrits par la suite.

L'effet des différents éléments de l'alliage et les raisons justifiant les intervalles revendiqués ou les limitations de ces éléments seront expliqués ci-dessous.

**TABLEAU 2**

| Eléments dans l'alliage | Mini | Maxi | Préférentiel | Exemple 1 | Exemple 2 |
|---|---|---|---|---|---|
| C | / | 0,05 | | 0,020 | 0,015 |
| S | / | 0,010 | | 0,001 | 0,001 |
| P | / | 0,020 | | 0,003 | 0,003 |
| Si | 0,015 | 0,5 | < 0,20 | 0,025 | 0,15 |
| Mn | 0,4 | 1,4 | | 1 | 1 |
| Ni | balance | balance | balance | balance | balance |
| Cr | 28 | 31,5 | | 30,0 | 29,0 |
| Cu | / | 0,30 | | 0,020 | 0,020 |
| Co | / | 0,15 | | 0,01 | 0,01 |
| Mo | 2 | 7 | 4 | 4,00 | 5,50 |
| Nb (+Ta) | 0,6 | 2 | | 0,80 | 1,2 |
| Al | 0 | 0,75 | 0,15 | 0,07 | 0,25 |
| Ti | 0 | 0,8 | 0,30 | 0,35 | 0,20 |
| Zr | 0,0008 | 0,012 | 0,006 | 0,0015 | 0,006 |
| B | 0,001 | 0,010 | 0,004 | 0,003 | 0,004 |
| N | / | 0,040 | | 0,01 | 0,01 |
| W | / | 0,10 | | 0,01 | 0,01 |
| Fe | 8 | 12 | | 9,00 | 8,5 |
| Nb/Si | 4 | | | 32 | 8 |

### Carbone, soufre, phosphore

Ces éléments sont des éléments résiduels dont les teneurs doivent être limitées le plus possible et, de toutes façons, fixées en dessous de 0,05 % en ce qui concerne le carbone, 0,010 % en ce qui concerne le soufre et 0,020 % en ce qui concerne le phosphore. Suivant les méthodes d'élaboration et les produits de départ pour la préparation des alliages, les teneurs effectives en carbone, soufre et phosphore peuvent être sensiblement inférieures aux limites maximales données. Comme il est visible aux colonnes 4 et 5 relatives aux exemples 1 et 2, les teneurs en carbone, soufre et phosphore effectives des coulées réalisées sont sensiblement inférieures aux valeurs maximales données ci-dessus.

### Silicium

Le silicium est un élément qui est toujours présent dans l'alliage mais dont on cherche à limiter la teneur à une valeur faible, de préférence inférieure à 0,20 %, par exemple 0,12 % ou 0,15 %. Dans tous les cas, cette teneur doit être inférieure à 0,5 % pour limiter la fissuration à chaud du métal de soudage. Toutefois, le silicium doit être présent en une teneur au moins égale à 0,015 % pour obtenir une bonne soudabilité du fait qu'il influe sur le mouillage et la viscosité du bain lors du soudage.

On verra plus loin, à propos du niobium, que le paramètre important, en ce qui concerne la résistance à la fissuration à chaud, est le rapport du pourcentage pondéral du niobium et du silicium.

### Manganèse

Le manganèse doit être au moins égal à 0,4 % pour permettre des conditions d'élaboration satisfaisantes de l'alliage en présence de soufre (limité à la valeur de 0,01 % mentionnée ci-dessous).

Le manganèse concourt à la résistance à la fissuration à chaud mais cet effet se sature rapidement en fonction de la teneur en manganèse et une teneur en manganèse limitée à 1,4 % permet d'obtenir des résultats satisfaisants.

### Chrome

Le chrome doit être proche du pourcentage de chrome dans l'alliage 690 et l'intervalle de composition de 28 % à 31,5 %, qui est également celui des alliages 52, s'est avéré satisfaisant dans le cas des soudures homogènes et hétérogènes faisant intervenir l'alliage 690 ou des aciers inoxydables. Ce niveau de chrome est nécessaire pour obtenir un bon comportement à la corrosion en milieu primaire PWR.

### Cuivre

Le cuivre doit être strictement limité en dessous de 0,30 % pour éviter une détérioration des propriétés de l'alliage.

### Cobalt

Le cobalt doit être impérativement limité à une valeur inférieure à 0,15 %. En effet, cet élément qui est activé en présence de radiations dans un réacteur nucléaire doit être évité le plus possible dans toute application pour la construction ou la réparation de réacteurs nucléaires.

### Molybdène

Le molybdène est un élément particulièrement important dans l'élaboration des alliages suivant l'invention, ce qui constitue une différence notable par rapport aux alliages connus antérieurement (voir tableau 1) qui ne renferment que des teneurs très faibles en molybdène.

Une campagne d'essais effectuée par la déposante de la présente demande de brevet a montré que le molybdène avait un effet décisif sur la résistance à la fissuration du métal déposé par fusion d'un fil de soudage en alliage de nickel, en particulier lorsque le métal de soudage est déposé sur des aciers inoxydables, par exemple des aciers à 18 % de chrome et 8 % de nickel avec ou sans addition de molybdène, sous forme massive ou sous forme de dépôt obtenu par soudage électrique à électrode enrobée ou TIG.

La campagne d'essais effectuée a montré que :
- pour des niveaux de molybdène faibles dans le métal fondu du fil de soudage, typiquement inférieurs à 0,5 %, on observe la formation de fissures de type 2, en particulier dans le cas du soudage des aciers inoxydables,
- lorsque la teneur en molybdène augmente, par exemple pour atteindre 1 % dans le métal fondu, on constate que la résistance à la fissuration de l'alliage de soudage est sensiblement améliorée lorsque l'alliage renferme des quantités suffisantes de titane (et/ou d'aluminium). Une teneur minimale de titane et/ou d'aluminium de 0,3 % à 0,4 %, avec une teneur en molybdène de 1 % dans l'alliage, permet de limiter à un niveau faible le nombre de fissures de type 2 dans le métal de soudage, dans le cas du soudage des aciers inoxydables en particulier ; ces résultats suggèrent d'augmenter les teneurs en molybdène, titane et/ou aluminium au-delà de ces limites pour limiter ou supprimer la fissuration,
- lorsque la teneur en molybdène augmente pour atteindre au moins 2 % dans le métal fondu, les essais effectués montrent que les fissures de type 2 disparaissent complètement et que l'effet du titane et/ou de l'aluminium est moindre que dans le cas d'un molybdène autour de 1 %, sur la résistance à la fissuration.

Les teneurs en molybdène ont été fixées dans le fil ou la baguette de soudage en alliage suivant l'invention en admettant que, dans la zone des défauts, la dilution est élevée et peut aller jusqu'à 50 % mais ne dépasse guère cette limite qui a été considérée comme respectée dans tous les travaux à l'origine de la présente demande de brevet, ce qui correspond à des conditions de soudage normales.

Comme résultat des essais, on a pu déterminer que la teneur en molybdène doit être d'au moins 2 % pour obtenir, dans tous les cas d'utilisation en soudage, une très bonne résistance à la fissuration et en particulier une disparition complète des fissures de type 2, tout en limitant la teneur totale en titane et aluminium à un niveau permettant d'éviter l'oxydation du métal de soudage.

Une teneur en molybdène supérieure à 7 % est possible, mais pas nécessaire, dans la mesure où l'effet du molybdène sur la résistance à la fissuration se sature pour une valeur de l'ordre de 7 %. Une teneur supérieure à 7 % augmente le prix de l'alliage et peut modifier les propriétés du métal de soudage de manière non souhaitable.

Le molybdène doit être de préférence voisin de 4 %.

### Aluminium et titane

On peut prévoir une certaine proportion de titane et/ou d'aluminium dans le métal de soudage en limitant toutefois la proportion d'aluminium à une valeur évitant des effets d'oxydation non souhaitables du bain de fusion lors du soudage.

Le titane peut être présent dans l'alliage en une proportion de 0 % à 0,8 % en poids et par exemple voisine de 0,30 %. Une teneur supérieure à 0,8 % n'est pas souhaitable.

L'aluminium peut être présent dans l'alliage dans une proportion de 0 % à 0,75 % en poids et par exemple voisine de 0,15 %. Une teneur supérieure à 0,75 % n'est pas souhaitable

### Zirconium et bore

Lorsqu'ils sont associés, ces éléments ont une incidence favorable sur la résistance à la fissuration par le phénomène de manque de ductilité (en anglais "ductility dip cracking"). Cependant, ces éléments ne sont pas suffisants à eux seuls pour résoudre les problèmes de fissuration auxquels remédie l'alliage suivant l'invention. En outre, le zirconium a, comme l'aluminium, un effet sur l'oxydation du bain de fusion lors du soudage. Le zirconium et le bore doivent donc être présents dans l'alliage mais dans des quantités limitées.

Le zirconium doit être présent dans l'alliage suivant l'invention dans une proportion comprise entre 0,0008 % et 0,012 % et, de préférence, dans une proportion de l'ordre de 0,006 %.

En relation avec ces proportions de zirconium, le bore doit être compris entre 0,001 % et 0,010 % et, de préférence, voisin de 0,004 %.

### Niobium et tantale

Le niobium a un effet sur la résistance à la fissuration à chaud. Cet élément ne doit pas être présent en quantité trop importante pour éviter d'augmenter les risques de fissuration à chaud et de modifier les caractéristiques du métal déposé de manière non souhaitable.

En conséquence, la proportion de niobium doit être d'au moins 0,6 % pour obtenir les effets souhaitables de résistance à la fissuration à chaud et au plus égale à 2 %.

La proportion de niobium, à l'intérieur de cet intervalle, doit être fixée à une valeur telle que le rapport pourcentage de niobium/pourcentage de silicium soit supérieur à 4, pour obtenir un effet satisfaisant sur la résistance à la fissuration à chaud.

### Fer

Le fer est fixé, comme dans les alliages du commerce et les matériaux de base de type 690, à une teneur entre 8 % et 12 % pour garantir la stabilité structurale de l'alliage (résistance aux phénomènes de formation d'une phase ordonnée fragilisante lors du vieillissement en service, risquant d'af fecter les caractéristiques mécaniques).

### Azote

L'azote, qui est un élément résiduel, n'est pas nécessaire dans l'alliage. L'azote sera limité, dans tous les cas, à une valeur inférieure à 0,040 %.

### Tungstène

Le tungstène est un élément qui n'est pas recherché dans l'alliage, cet élément résiduel étant limité, de toutes façons, à 0,10 % pour éviter une modification non souhaitable des propriétés du métal de soudage.

D'autres éléments résiduels peuvent se trouver dans l'alliage en proportion faible ; ces éléments peuvent être par exemple l'étain, le vanadium, le plomb, le cadmium, le magnésium, le zinc, l'antimoine, le tellure, le calcium ou le cérium. Ces éléments qui sont en quantité très faible dans l'alliage se trouvent dans une proportion totale avec les autres éléments résiduels envisagés ci-dessus (carbone, soufre, phosphore, cuivre, cobalt, azote et tungstène) inférieure à 0,5 % en poids.

### Nickel

En tant que base de l'alliage, il constitue le solde de la composition pour parvenir à 100 %.

Les compositions de deux alliages de soudage suivant l'invention sont données au tableau 2 sous les colonnes 5 et 6 (exemple 1 et exemple 2).

### Exemple 1

Dans le cas de l'exemple 1, la teneur en molybdène se situe à la valeur optimale (4 %). La teneur en aluminium se situe à une valeur de 0,07 % et la teneur en titane à une valeur proche de la valeur typique de 0,30 %.

La teneur en silicium de l'alliage est faible (0,025 %) et se situe nettement en dessous de la limite supérieure préférentielle. Bien que la teneur en niobium ne soit que de 0,80 %, le rapport niobium/silicium est élevé et du même ordre de grandeur que dans les alliages du commerce de type amélioré figurant au tableau 1 (32). La valeur de ce rapport est très supérieure à la borne inférieure imposée. Les teneurs en zirconium et bore se situent vers le bas de l'intervalle revendiqué.

### Exemple 2

Dans le cas de l'exemple 2, la teneur en molybdène est supérieure à la teneur moyenne considérée comme préférentielle (4 %). La teneur en aluminium sensiblement plus élevée que dans le cas de l'exemple 1 est fixée au-dessus de la valeur typique de 0,15 % et la teneur en titane est plus faible que la valeur typique, l'ensemble de l'aluminium et du titane représentant un pourcentage pondéral sensiblement identique dans le cas de l'exemple 1 et dans le cas de l'exemple 2.

La teneur en bore est plus élevée que dans le cas de l'exemple 1 et correspond aux valeurs préférentielles.

La teneur en silicium est sensiblement plus élevée que dans le cas de l'exemple 1. La teneur en niobium est également un peu plus forte que dans le cas de l'exemple 1. Du fait de la présence de silicium en assez grande quantité, le rapport niobium/silicium est sensiblement inférieur au cas de l'exemple 1.

Cependant, ce rapport est encore deux fois plus élevé que la valeur minimale requise.

On a élaboré des fils de soudage dans les deux nuances correspondant aux exemples 1 et 2. On a utilisé les fils de soudage pour réaliser différents soudages homogènes ou hétérogènes, d'alliages de nickel à 30 % et à 15 % de chrome et d'aciers inoxydables.

On a pu observer l'absence totale de fissures de type 2 dans le métal déposé, même dans les zones de dilution de la soudure.

Le métal déposé est également pratiquement exempt de fissures de type 1 dans tous les cas.

On n'a relevé aucune trace d'oxydation pouvant conduire à une détérioration du métal déposé.

Dans le cas de fils en alliage selon l'art antérieur, on n'a jamais pu obtenir de tels résultats.

En considérant les exemples comparatifs des colonnes 5 et 6 du tableau 1, on peut remarquer que l'alliage comparatif de la colonne 5 (CF 52) présente une teneur en silicium comparable à celle de l'exemple 1 selon l'invention et une teneur en niobium un peu supérieure, le rapport niobium/silicium étant supérieur de 50 % au rapport niobium/silicium de l'exemple 1. Toutefois, cet alliage selon l'art antérieur ne renferme qu'une très faible proportion de molybdène (0,012 %) alors que les alliages suivant l'invention renferment plus de 2 % et généralement 4 % ou plus de molybdène. Malgré un rapport niobium/silicium supérieur et des teneurs proches en aluminium et titane, l'alliage CF 52 ne permet pas d'obtenir une tenue à la fissuration comparable à celle des alliages suivant l'invention.

Dans le cas du second exemple comparatif (alliage 52 M), à la colonne 6 du tableau 2, les teneurs en silicium, en niobium et le rapport niobium/silicium sont proches de ceux de l'alliage de l'exemple 1. L'aluminium et le titane sont, d'autre part, limités à des valeurs comparables à celles des exemples selon l'invention. Les teneurs en zirconium et bore des alliages comparatifs sont d'autre part analogues respectivement à celles des alliages des exemples 1 et 2 selon l'invention.

Il est parfaitement visible qu'une quasi-absence de molybdène (0,02 %) dans le second alliage comparatif explique les différences de comportement au soudage et les bons résultats obtenus avec les exemples d'alliage suivant l'invention et en particulier l'exemple 1.

La comparaison des exemples selon l'invention et des exemples des alliages suivant l'art antérieur montre donc qu'un alliage de soudage ayant une teneur en molybdène de l'ordre de 4 % ou un peu supérieure, une teneur en niobium suffisante pour obtenir un rapport niobium/silicium sensiblement supérieur à 4 ainsi que des teneurs modérées en aluminium et titane permet de résoudre les problèmes relatifs au soudage des alliages de nickel à environ 15 % et 30 % de chrome aux aciers inoxydables.

L'alliage suivant l'invention permet d'obtenir des fils de soudage électrique sous gaz permettant le soudage homogène ou hétérogène sans défaut des alliages au nickel et des aciers inoxydables dans le cas de la construction et de la réparation des composants de réacteurs nucléaires.

L'invention ne se limite pas strictement aux exemples de réalisation décrits.

Les teneurs des différents éléments des alliages pour le soudage électrique dans les applications envisagées peuvent être adaptées à l'intérieur des intervalles revendiqués pour optimiser les propriétés du métal de soudage et les conditions de soudage.

L'alliage selon l'invention peut être utilisé non seulement sous la forme de fils ou baguettes de soudage électrique sous gaz mais encore sous d'autres formes, par exemple sous la forme d'électrodes enrobées.

Bien que l'alliage soit particulièrement destiné aux applications dans le domaine de la construction et de la réparation des réacteurs nucléaires, on peut envisager son utilisation dans d'autres industries.

## Revendications

1. Alliage à base de nickel pour la soudure électrique d'alliages de nickel et d'aciers, et notamment d'aciers inoxydables, **caractérisé par le fait qu'**il renferme, en poids, moins de 0,05 % de carbone, de 0,015 % à 0,5 % de silicium, de 0,4 % à 1,4 % de manganèse, de 28 % à 31,5 % de chrome, de 8 % à 12 % de fer, de 2 % à 7 % de molybdène, de 0,6 % à 2 % au total de niobium et de tantale, le rapport des pourcentages de niobium plus tantale et de silicium étant au moins égal à 4, moins de 0,04 % d'azote, de 0,0008 % à 0,0120 % de zirconium, de 0,0010 % à 0,0100 % de bore, jusqu'à 0,75 % d'aluminium, jusqu'à 0,8 % de titane, moins de 0,01 % de soufre, moins de 0,020 % de phosphore, moins de 0,30 % de cuivre, moins de 0,15 % de cobalt et moins de 0,10 % de tungstène, le reste de l'alliage, à l'exception d'impuretés inévitables dont la teneur totale est au plus égale à 0,5 %, étant constitué par du nickel.

2. Alliage suivant la revendication 1, **caractérisé par le fait qu'**il renferme de préférence moins de 0,20 % de silicium, environ 4 % de molybdène, 0,006 % de zirconium et 0,004 % de bore.

3. Fil de soudage pour soudage électrique sous gaz d'alliages de nickel et d'aciers, en particulier d'aciers inoxydables, **caractérisé par le fait qu'**il est réalisé en un alliage selon l'une quelconque des revendications 1 et 2.

4. Utilisation d'un alliage selon l'une quelconque des revendications 1 et 2, ou d'un fil selon la revendication 3, au soudage d'éléments ou composants d'un réacteur nucléaire, lors d'opérations de construction, d'assemblage ou de réparation d'un élément ou composant du réacteur nucléaire.

## Patentansprüche

1. Legierung auf Nickelbasis für das elektrische Schweißen von Nickellegierungen und Stählen, insbesondere nichtrostenden Stählen, **dadurch gekennzeichnet, dass** sie auf das Gewicht bezogen enthält: weniger als 0,05 % Kohlenstoff, 0,015 % bis 0,5 % Silicium, 0,4 % bis 1,4 % Mangan, 28 % bis 31,5 % Chrom, 8 % bis 12 % Eisen, 2 % bis 7 % Molybdän, 0,6 % bis 2 % Niob und Tantal insgesamt, wobei das Verhältnis der prozentualen Mengenanteile von Niob plus Tantal und Silicium mindestens 4 ist, weniger als 0,04 % Stickstoff, 0,0008 % bis 0,0120 % Zirconium, 0,0010 % bis 0,0100 % Bor, bis zu 0,75 % Aluminium, bis zu 0,8 % Titan, weniger als 0,01 % Schwefel, weniger als 0,020 % Phosphor, weniger als 0,30 % Kupfer, weniger als 0,15 % Cobalt und weniger als 0,10 % Wolfram, wobei die restliche Legierung abgesehen von unvermeidlichen Verunreinigungen, deren Gesamtmenge höchstens 0,5 % beträgt, aus Nickel besteht.

2. Legierung nach Anspruch 1, **dadurch gekennzeichnet, dass** sie vorzugsweise weniger als 0,20 % Silicium, etwa 4 % Molybdän, 0,006 % Zirconium und 0,004 % Bor enthält.

3. Schweißdraht zum elektrischen Schutzgasschweißen von Nickellegierungen und Stählen, insbesondere nichtrostenden Stählen, **dadurch gekennzeichnet, dass** er aus einer Legierung nach einem der Ansprüche 1 und 2 hergestellt ist.

4. Verwendung einer Legierung nach einem der Ansprüche 1 und 2 oder eines Drahtes nach Anspruch 3 zum Schweißen von Elementen oder Komponenten eines Kernreaktors beim Bau, bei der Montage oder bei der Instandsetzung eines Elements oder einer Komponente des Kernreaktors.

## Claims

1. A nickel-based alloy for the electrical welding of alloys of nickel and steel, in particular stainless steel, **characterised in that** it contains, by weight, at least 0.05% of carbon, from 0.015% 0.5% of silicon, from 0.4% to 1.4% of manganese, from 28% to 31.5% of chromium, from 8% to 12% of iron, from 2% to 7% of molybdenum, from 0.6% to 2% in total of niobium and of tantalum, the ratio of the percentages of niobium plus tantalum and of silicon being at least equal to 4, less than 0.04% of nitrogen, from 0.0008% to 0.0120% of zirconium, from 0.0010% to 0.0100% of boron, up to 0.75% of aluminium, up to 0.8% of titanium, less than 0.01% of sulphur, less than 0.020% of phosphorus, less than 0.30% of copper, less than 0.15% of cobalt and less than 0.10% of tungsten, the remainder of the alloy, with the exception of inevitable impurities the total content of which is at most equal to 0.5%, being made up of nickel.

2. An alloy according to Claim 1, **characterised in that** it contains preferably less than 0.20% of silicon, about 4% of molybdenum, 0.006% of zirconium and 0.004% of boron.

3. Welding wire for gas-shielded electrical welding of alloys of nickel and steel, in particular stainless steel, **characterised in that** it is made of an alloy according to either Claim 1 or Claim 2.

4. Use of an alloy according to either Claim 1 or Claim 2, or of a wire according to Claim 3, for the welding of members or components of a nuclear reactor during construction or assembly operations, or operations to repair a member or a component of a nuclear reactor.
